# FASCICULE DE BREVET EUROPEEN

(11) **EP 2 927 785 B1**
(45) Date de publication et mention de la délivrance du brevet: **01.02.2017**
(21) Numéro de dépôt: 15248040.6
(22) Date de dépôt: 03.04.2015
(51) Int. Cl.: G06F 3/0354

(54) **FREIN D'UNE BOULE DE DESIGNATION**
BREMSE FÜR EINEN TRACKBALL
BRAKE OF A TRACKBALL

(30) Priorité: 04.04.2014 FR 1400827
(43) Date de publication de la demande: 07.10.2015
(73) Titulaire: THALES, 92400 Courbevoie (FR)
(72) Inventeur: Bigand, Jean-Louis, 41100 Vendome (FR)
(74) Mandataire: Collet, Alain

(56) Documents cités:
- US-A1- 2012 038 495

## Description

L'invention concerne une boule de désignation notamment utilisée pour pointer des objets sur un écran d'un système informatique.

On entend par boule de désignation un ensemble comportant un corps fixe et une partie mobile telle que par exemple une sphère. La partie fixe comprend des capteurs permettant de délivrer une information représentative de la position de la sphère par rapport à la partie fixe. L'information peut être associée à une position sur l'écran au moyen d'un calculateur de l'équipement. Un opérateur déplace la sphère avec les doigts pour atteindre une position recherchée sur l'écran et ainsi pointer un objet affiché sur l'écran.

L'invention trouve une utilité particulière pour une boule de désignation appartenant à un équipement monté à bord d'un aéronef. La boule de désignation peut alors être utilisée pour sélectionner des paramètres de vol affichés sur l'écran du système. De façon plus générale, la boule de désignation permet de pointer des objets affichés sur l'écran.

L'aéronef peut être soumis à des turbulences qui risquent de perturber le pointage des objets. Plus précisément, les turbulences génèrent des vibrations pouvant entrainer des mouvements incontrôlés de la sphère. Même en l'absence de turbulences avérées, de légers phénomènes d'accélération subis par l'équipement, empêchent les membres d'équipage de pointer une zone graphique au-delà d'une certaine précision.

Une solution habituelle à ce problème consiste à surdimensionner sur l'écran les objets désignables de manière à prendre en compte cette limitation. Par conséquent cela réduit le nombre d'objets affichables sur une surface d'affichage donnée.

On a également tenté de stabiliser la main de l'opérateur en créant des surfaces d'appui adaptées. Un exemple est donné dans la demande de brevet publiée sous le numéro EP 1 552 376 où la partie fixe de la boule de désignation possède une forme ergonomique destinée à recevoir la paume de l'opérateur, d'où son nom de « repose paume ». Néanmoins, un tel repose paume ne permet pas de stabiliser complètement la sphère au travers des doigts de l'opérateur.

Ces deux solutions sont souvent associées à des moyens de freinage de la sphère tels que par exemple décrit dans le document US 2012/038495 A1. Ces moyens permettent limiter les mouvements incontrôlés de la sphère en cas de vibrations.

Le frein est naturellement solidaire de la partie fixe de la boule de désignation et exerce un effort sur la sphère par exemple au moyen d'un patin frottant contre la sphère. Lors des déplacements de la sphère, l'appui du patin génère un couple de frottement s'opposant aux rotations de la sphère. Le patin est maintenu en appui contre la sphère au moyen d'un ressort prenant appui contre la partie fixe.

En supposant la sphère accessible aux doigts de l'opérateur par le dessus, une solution déjà mise en oeuvre consiste à positionner une surface frottante sur la boule au-dessus du plan de symétrie de la sphère. La surface frottante est généralement réalisée par une membrane en matière plastique. La force exercée suivant l'axe vertical de la sphère par la surface frottante est réalisé par un élastomère ou un système à ressort exerçant un appui sur la surface frottante.

Cette disposition entraine de nombreux problèmes. La surface utilisable par l'opérateur est réduite du fait de la présence de la surface frottante au dessus du plan de symétrie de la sphère.

Le couple de frottement généré par le frein est fortement dépendant de la précision de coaxialité entre l'axe vertical de la sphère et l'axe de la surface de frottement. La sphère est généralement posée sur des pivots formant des capteurs permettant de délivrer une information de la position de la sphère par rapport à la partie fixe. L'écart entre les axes de la sphère et du frein dépend d'une chaine de cotes passant par de nombreuses pièces mécaniques. La précision de coaxialité nécessite des assemblages et des usinages précis.

Le couple de frottement généré dépend de la pression exercée par le dispositif élastique qui dépend elle-même de la position verticale de la sphère. Pour limiter cette dépendance, on peut être amené à prévoir des moyens de calage verticaux du frein. Cette solution est couteuse car les moyens de calage sont à régler unitairement pour chaque boule de désignation.

Le couple généré varie également fortement en fonction des variations du diamètre de la sphère, en particulier lors des variations de température, la faisant monter contre le dispositif de freinage lors d'une utilisation à température élevée ou descendre lors d'une utilisation à température basse.

Par ailleurs, le couple de frottement est réglé au montage de la boule de désignation. Pour modifier ce réglage, il est nécessaire de démonter le frein, ce qui est difficilement acceptable dans le domaine aéronautique.

Enfin on a constaté que le frein est particulièrement fragile à une utilisation hors de sa position normale d'utilisation comme lors d'un retournement pendant le transport.

L'invention vise à pallier tout ou partie des problèmes cités plus haut en proposant une boule de désignation possédant un frein beaucoup plus tolérant vis-à-vis de variations dimensionnelles des différentes pièces mécaniques constituant la boule de désignation.

A cet effet, l'invention a pour objet une boule de désignation comprenant un corps destiné à être fixé sur un poste de travail, une sphère mobile en rotation par rapport au corps, un ensemble de capteurs délivrant une information de position relative de la sphère par rapport au corps et des moyens de freinage des mouvements de rotation de la sphère par rapport au corps, caractérisée en ce que les moyens de freinage comprennent une bague de frottement enserrant la sphère, en ce que la bague s'étend principalement dans un plan et en ce que la bague est libre en translation dans le plan dans lequel s'étend la bague.

L'invention sera mieux comprise et d'autres avantages apparaîtront à la lecture de la description détaillée d'un mode de réalisation donné à titre d'exemple, description illustrée par le dessin joint dans lequel :
la figure 1 représente en perspective une boule de désignation selon l'invention ;
la figure 2 représente en vue de face la boule de désignation ;
la figure 3 représente une coupe partielle de la boule de désignation.

Par souci de clarté, les mêmes éléments porteront les mêmes repères dans les différentes figures.

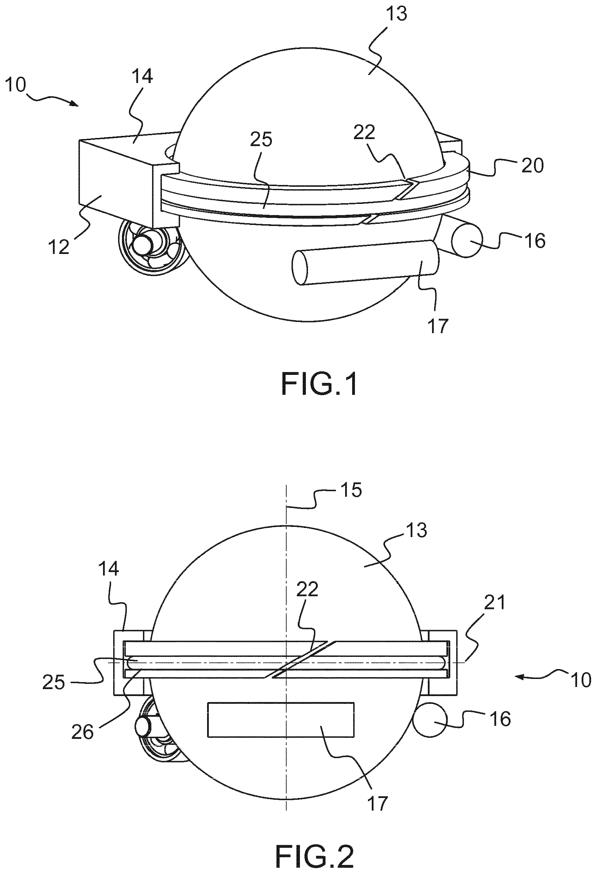

La figure 1 représente en perspective une boule de désignation 10 destiné à être actionnée par la main d'un opérateur. La boule de désignation 10 comprend un corps fixe 12 et une sphère 13 que l'opérateur peut faire tourner par rapport au corps fixe 12. Dans l'exemple représenté, le corps fixe 12 comprend une plaque 14 destinée à être fixée sur un poste de travail comme par exemple une planche de bord d'un aéronef. La boule de désignation 10 comprend un ensemble de capteurs délivrant une information de position relative de la sphère 13 par rapport au corps fixe 12.

La figure 2 représente en vue de face la boule de désignation 10. Cette vue est perpendiculaire à la plaque 14. Le poste de travail dans lequel est installée la boule de désignation 10 peut être formé par un plan de travail horizontal au voisinage de la boule de désignation 10. La plaque 14 est alors également horizontale. La sphère 13 comprend une partie émergeant au dessus de la plaque 14. C'est cette partie de la sphère que l'opérateur manoeuvre avec ses doigts. L'ensemble de capteurs est situé sous la plaque 14 à l'intérieur du corps fixe 12. Une boule de désignation 10 mettant en oeuvre l'invention peut bien entendue être positionnée sur un plan de travail incliné. On définit un axe 15 de symétrie de la sphère 13, l'axe 15 étant perpendiculaire à la plaque 14. L'axe 15 est vertical si le plan de la plaque 14 est horizontal.

L'ensemble de capteurs comprend par exemple deux galets 16 et 17 roulant sans frottement contre la sphère 13 et permettant chacun de connaitre la position angulaire de la sphère 13 autour d'axes parallèles au plan de la plaque 14. Les galets 16 et 17 sont par exemple fixés chacun au rotor d'un codeur angulaire délivrant l'information de position relative de la sphère 13. D'autres types de capteurs peuvent être utilisés, comme par exemple des capteurs optiques ou magnétiques sensibles aux déplacements de la sphère 13. L'information issue de l'ensemble de capteurs est transmise à un calculateur pouvant appartenir à la boule de désignation 10 ou être déporté. Le calculateur est configuré pour décoder les informations reçues des codeurs angulaires associés aux galets 16 et 17. Le calculateur envoie par exemple les informations décodées vers le coeur d'un système informatique comprenant un écran sur lequel un pointeur peut se déplacer en fonction des informations.

Lorsque l'environnement dans lequel est installée la boule de désignation peut être soumis à des vibrations, celles-ci peuvent entraîner des mouvements incontrôlés de la sphère 13. Pour limiter ces mouvements, la boule de désignation comprend des moyens de freinage des mouvements de rotation de la sphère 13 par rapport au corps 12. Selon l'invention, les moyens de freinage comprennent une bague de frottement 20 enserrant la sphère 13. Le frottement de la bague 20 contre la sphère 13 génère un couple résistant permettant de freiner les mouvements de rotation de la sphère 13 sur elle-même.

La bague s'étend principalement dans un plan 21 perpendiculaire à l'axe 15, c'est-à-dire parallèlement à la plaque 14. La bague 20 a une forme d'anneau circulaire dans le plan 21. Dans la pratique, la bague 20 possède une certaine épaisseur perpendiculairement au plan 21. L'épaisseur de la bague 20 est nettement inférieure au diamètre de la bague 20 dans le plan 21. Sur tout son diamètre, la bague contient le plan 21.

La sphère 13 est posée sur les galets 16 et 17. Afin de détendre la chaîne de cote reliant la sphère 13 aux moyens de freinage, la bague 20 est libre en translation dans le plan 21. Autrement dit la bague 20 possèdent deux degrés de liberté en translation dans le plan 21. Ces deux degrés de liberté combinés au frottement de la bague 20 contre la surface de la sphère 13 permettent à la bague 20 de centrer automatiquement son diamètre sur la sphère 13 et plus précisément sur son axe 15.

Avantageusement, le plan 21 dans lequel la bague 20 s'étend est un plan de symétrie de la sphère 13. Autrement dit, le plan 21 coupe la sphère par un grand diamètre de la sphère 13. La bague 20 frotte sur un diamètre de la sphère 13. Le fait de disposer le plan 21 au niveau d'un plan de symétrie de la sphère 13 permet d'augmenter au maximum la surface de la partie émergeante de la sphère 13 tout en assurant un maintient de la sphère 13 dans la partie fixe 12 de la boule de désignation.

Alternativement, le plan 21 peut être disposé de façon à ce que la partie émergeante de la sphère 13 soit plus petite pour des raisons d'installation dans le poste de travail dans lequel est installée la boule de désignation 10. On peut aussi augmenter la surface de la partie émergeante de la sphère 13 au-delà du plan de symétrie de la sphère 13.

Avantageusement, la bague 20 est fendue. Autrement dit, la bague 20 forme un anneau circulaire ouvert. Une fente 22 permet de réaliser cette ouverture est visible sur les deux figures 1 et 2. La fente donne à la bague une certaine élasticité lui permettant de s'adapter à des écarts de diamètre de la sphère 13. Ces écarts sont par exemple dus aux tolérances de fabrication de la sphère 13 ou encore à des dilatations thermiques de la sphère 13 durant son utilisation. L'adaptation de la bague 20 lui permet également de compenser une usure de sa surface frottante qui intervient obligatoirement tout au long de l'utilisation de la boule de désignation 10. La fente 22 peut être perpendiculaire au plan 21 ou inclinée comme représenté sur les figures.

Deux caractéristiques du matériau de la bague 20 sont utilisées pour lui permettre de remplir sa fonction de freinage de la sphère 13 : D'une part, l'élasticité de la bague 20 caractérisée ses dimensions et son module d'Young lui permet d'assurer un effort de serrage sur la sphère 13. D'autre part, le coefficient de frottement bague 20/sphère 13 lui permet de quantifier le couple de frottement associé à l'effort de serrage.

Il est possible de dissocier ces deux caractéristiques en ajoutant un élément élastique supplémentaire permettant d'assurer le serrage de la bague 20 contre la sphère 13. A cet effet, les moyens de freinage comprennent avantageusement un ressort annulaire 25 s'étendant dans le plan 21 et comprimant la bague 20 contre la sphère 13. Le ressort 25 peut être disposé dans une gorge 26 réalisé dans la bague 20.

La bague 20 est par exemple réalisée en polytétrafluoroéthylène (PTFE). Ce matériau possède un module d'Young trop faible pour assurer un effort suffisant de la bague sur la sphère 13. Pour cela, le serrage de la bague 20 sur la sphère au moyen d'un ressort par exemple réalisé en fil d'acier à ressort. Par ailleurs, le polytétrafluoroéthylène possède un coefficient de frottement relativement faible. Ceci présente l'avantage de réduire la sensation de frottements secs et de décollement intervenant lorsqu'un opérateur commence un mouvement de la sphère.

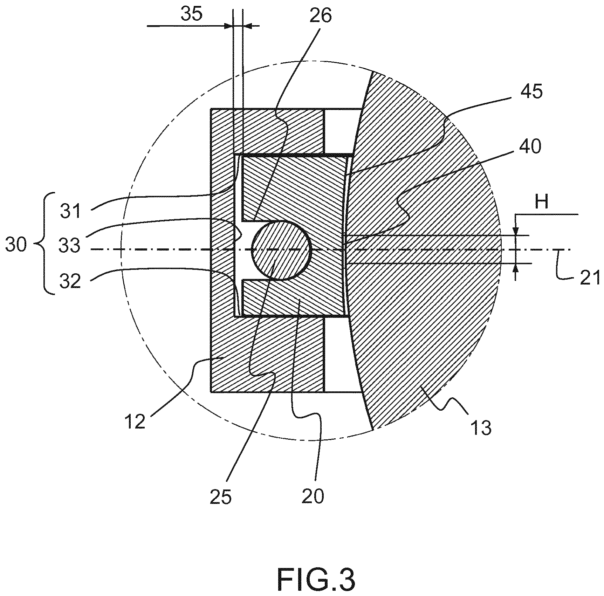

La figure 3 représente en coupe partielle la liaison entre la bague 20 et le corps 12. Afin d'assurer la liberté en translation de la bague 20 par rapport au corps 12 dans le plan 21, le corps 12 comprend une gorge 30 s'étendant dans le plan 21. Comme la bague 20, la gorge est annulaire et centrée sur l'axe 15. Le diamètre extérieur de la bague 20 est inférieur au diamètre intérieur de la gorge 30.

Dans un plan radial autour de l'axe 15, la gorge a une section constante possédant principalement deux flancs 31, 32 et un fond 33. Les flancs 31 et 32 sont sensiblement parallèles au plan 21. Le fond 33 est sensiblement perpendiculaire au plan 21. La bague 20 est guidée en translation entre les deux flancs 31 et 32. Un jeu fonctionnel 35 est prévu entre la bague 20 et le fond 33. Le jeu fonctionnel 35 permet la liberté en translation de la bague 20 par rapport au corps 12. La valeur du jeu 35 est choisie en fonction des tolérances de positionnement de la sphère 13 par rapport au corps 12. La valeur du jeu 35 est égale à la différence entre le diamètre extérieur de la bague 20 et le diamètre intérieur de la gorge 30. Le jeu fonctionnel 35 permet aussi de tenir compte de variations dimensionnelles de la sphère 13 lors de variations de température

En pratique afin d'insérer la bague 20 dans le corps 12, la plaque 14 peut être constituée de deux demi plaques fixées l'une à la l'autre après montage de la bague 20. La gorge 30 s'étend dans les deux demi-plaques. Sur les figures 1 et 2, seule une des demi-plaques est représentée. L'assemblage de la bague 20 et des deux demi-plaques se fait en deux temps. Tout d'abord, on insère la bague dans une première des deux demi-plaques dans un mouvement de translation dont la direction est portée par plan 21. En suite, on insère la seconde demi-plaque, toujours selon le même mouvement de translation pour fermer la gorge 30 autour de la bague 20.

La bague 20 comprend une surface de frottement 40 destinée à frotter contre la sphère 13 pour freiner ses mouvements de rotations. Le jeu fonctionnel 35 permet d'absorber les écarts de position de la sphère 13 en translation dans le plan 21. Il est également avantageux de prévoir des moyens pour d'absorber les écarts de position de la sphère 13 perpendiculairement au plan 21. A cet effet, la surface de frottement 40 possède une forme cylindrique s'étendant perpendiculairement au plan 21. Autrement dit la surface de frottement 40 forme une portion de cylindre d'axe 15. La hauteur H du cylindre, mesurée selon l'axe 15 est défini en fonction des variations de hauteur du plan 21, plan de symétrie de la sphère 13 portant un grand diamètre de la sphère 13. De façon plus générale, la surface cylindrique 40 étant configurée pour autoriser un déplacement de la sphère 13 en translation perpendiculairement au plan 21.

Alternativement, la surface de frottement 40 peut avoir une forme tronconique possédant un faible angle d'ouverture. L'angle d'ouverture est orienté de façon à générer un effort de la sphère 13 en direction des galets 16 et 17 et ainsi plaquer la sphère 13 contre les galets.

Sur la figure 3, la surface de frottement 40 a été représentée à légère distance de la sphère 13. En fonctionnement, il est bien entendu que la surface de frottement 40 est en pression contre la sphère sous l'effet de l'élasticité du ressort 25. Cette pression génère le couple de frottement utilisé pour le freinage de la sphère 13.

La sphère 13 est susceptible de se décoller des deux galets 16 et 17, par exemple sous l'effet de vibrations importantes lors du fonctionnement ou lors du transport de la boule de désignation 10 avant son installation dans son plan de travail. Un tel décollement peut entrainer une extraction de la sphère 13 hors de son logement. Pour limiter ce risque, il est avantageux de prévoir des moyens pour limiter la translation de la sphère 13 perpendiculairement au plan 21. Autrement dit, la boule de désignation 10 peut comprendre une butée contre laquelle la sphère 13 est susceptible de venir en appui pour éviter que la sphère 13 ne puisse se désolidariser complètement du corps 12. Cette fonction de butée est avantageusement réalisée par la bague 20 elle-même qui possède alors une butée 45 apte à limiter une translation de la sphère 13 perpendiculairement au plan 21.

Pour éviter que la sphère 13 ne viennent se coincer dans la bague 20, la butée 45 est avantageusement une portion de surface sphérique complémentaire de celle de la sphère 13 et venant dans le prolongement la surface de frottement 40 sans rupture de pente. Plus précisément, la surface de frottement 40 est de forme cylindrique de même diamètre que la sphère 13. Le plus grand diamètre de la portion de surface sphérique est également le diamètre de la sphère 13. La butée 45 referme légèrement l'ouverture de la bague 20 au dessus du plan 21.

## Revendications

1. Boule de désignation comprenant un corps (12) destiné à être fixé sur un poste de travail, une sphère (13) mobile en rotation par rapport au corps (12), un ensemble de capteurs (16, 17) délivrant une information de position relative de la sphère (13) par rapport au corps (12) et des moyens de freinage des mouvements de rotation de la sphère (13) par rapport au corps (12), **caractérisée en ce que** les moyens de freinage comprennent une bague de frottement (20) enserrant la sphère (13), **en ce que** la bague (20) s'étend principalement dans un plan (21), et **en ce que** la bague (20) est libre en translation dans le plan (21) dans lequel s'étend la bague (20).

2. Boule de désignation selon la revendication 1, **caractérisée en ce que** le plan (21) dans lequel la bague (21) s'étend est un plan de symétrie de la sphère (13).

3. Boule de désignation selon l'une des revendications précédentes, **caractérisée en ce que** la bague (20) de frottement est fendue (22).

4. Boule de désignation selon l'une des revendications précédentes, **caractérisée en ce que** les moyens de freinage comprennent un ressort annulaire (25) s'étendant dans le plan (21) et comprimant la bague de frottement (20) contre la sphère (13).

5. Boule de désignation selon l'une des revendications précédentes, **caractérisée en ce que** le corps (12) comprend une gorge (30) s'étendant dans le plan (21), la gorge (30) ayant une section constante possédant principalement deux flancs (31, 32) et un fond (33), les flancs (31, 32) étant sensiblement parallèles au plan (21) et le fond (33) étant sensiblement perpendiculaire au plan (21), **en ce qu'**un jeu fonctionnel (35) est prévu entre la bague (20) et le fond (33), le jeu fonctionnel (35) permettant la liberté en translation de la bague (20).

6. Boule de désignation selon l'une des revendications précédentes, **caractérisée en ce que** la bague (20) comprend une surface de frottement (40) destinée à frotter contre la sphère (13) pour freiner ses mouvements de rotations et **en ce que** la surface de frottement (40) possède une forme cylindrique s'étendant perpendiculairement au plan (21), la forme cylindrique étant configurée pour autoriser un déplacement de la sphère (13) en translation perpendiculairement au plan (21).

7. Boule de désignation selon l'une des revendications précédentes, **caractérisée en ce que** la bague (20) comprend une butée (45) apte à limiter une translation de la sphère (13) perpendiculairement au plan (21).

8. Boule de désignation selon les revendications 6 et 7, **caractérisée en ce que** la butée (45) possède une portion de surface sphérique complémentaire de celle de la sphère (13) et venant dans le prolongement de la surface de frottement (40) sans rupture de pente.

## Patentansprüche

1. Trackball, umfassend einen Körper (12) zur Befestigung an einem Arbeitsplatz, eine Kugel (13), rotierend beweglich in Bezug auf den Körper (12), einen Satz Sensoren (16, 17), die eine Information der relativen Position bezüglich der Kugel (13) gegenüber dem Körper (12) liefern und Bremsmittel der Rotationsbewegungen der Kugel (13) in Bezug auf den Körper (12), **dadurch gekennzeichnet, dass** die Bremsmittel einen Reibring (20) umfassen, der die Kugel (13) einspannt, dass der Ring (20) sich hauptsächlich in einer Ebene (21) erstreckt, und dass der Ring (20) in der Ebene (21), in der sich der Ring erstreckt, frei verschiebbar ist (20).

2. Trackball nach Anspruch 1, **dadurch gekennzeichnet, dass** die Ebene (21), in der sich der Ring (21) erstreckt, eine Symmetrieebene der Kugel (13) ist.

3. Trackball nach einem der vorhergehenden Ansprüche, **dadurch gekennzeichnet, dass** der Reibring (20) gespalten (22) ist.

4. Trackball nach einem der vorhergehenden Ansprüche, **dadurch gekennzeichnet, dass** die Bremsmittel eine Ringfeder (25) umfassen, die sich in der Ebene (21) erstreckt und den Reibring (20) gegen die Kugel (13) drückt.

5. Trackball nach einem der vorhergehenden Ansprüche, **dadurch gekennzeichnet, dass** der Körper (12) eine Nut (30) umfasst, die sich in der Ebene (21) erstreckt, wobei die Nut (30) einen konstanten Querschnitt mit hauptsächlich zwei Flanken (31, 32) und einem Grund (33) hat, wobei die Flanken (31, 32) im Wesentlichen parallel zur Ebene (21) sind und der Grund (33) im Wesentlichen senkrecht zur Ebene (21) ist, und dass ein Funktionsspiel (35) zwischen dem Ring (20) und dem Grund (33) vorhanden ist, wobei das Funktionsspiel (35) die freie Verschiebung des Rings (20) ermöglicht.

6. Trackball nach einem der vorhergehenden Ansprüche, **dadurch gekennzeichnet, dass** der Ring (20) eine Reibfläche (40) umfasst, die dazu dient, an der Kugel (13) zu reiben um ihre Rotationsbewegungen zu bremsen, und dass die Reibfläche (40) eine zylindrische Form besitzt, die sich senkrecht zur Ebene (21) erstreckt, wobei die zylindrische Form konfiguriert ist, um eine Bewegung der Kugel (13) in senkrechter Verschiebung zur Ebene (21) zu ermöglichen.

7. Trackball nach einem der vorhergehenden Ansprüche, **dadurch gekennzeichnet, dass** der Ring (20) einen Anschlag (45) umfasst, der geeignet ist, eine Verschiebung der Kugel (13) senkrecht zur Ebene (21) zu begrenzen.

8. Trackball nach den Ansprüchen 6 und 7, **dadurch gekennzeichnet, dass** der Anschlag (45) einen zum dem der Kugel (13) komplementären sphärischen Oberflächenabschnitt besitzt und ohne Neigungsänderung in die Verlängerung der Reibfläche (40) geht.

## Claims

1. A trackball comprising a body (12) that is intended to be fixed to a workstation, a sphere (13) that is rotatable with respect to the body (12), a set of sensors (16, 17) that provide information relating to the relative position of the sphere (13) with respect to the body (12), and means for braking the rotational movements of the sphere (13) with respect to the body (12), **characterised in that** the braking means comprise a friction ring (20) that encircles the sphere (13), **in that** the ring (20) extends mainly in one plane (21), and **in that** the ring (20) is free to move translationally in the plane (21) in which the ring (20) extends.

2. The trackball according to claim 1, **characterised in that** the plane (21) in which the ring (21) extends is a plane of symmetry of the sphere (13).

3. The trackball according to any of the preceding claims, **characterised in that** the friction ring (20) is slit (22).

4. The trackball according to any of the preceding claims, **characterised in that** the braking means comprise an annular spring (25) that extends in the plane (21) and compresses the friction ring (20) against the sphere (13).

5. The trackball according to any of the preceding claims, **characterised in that** the body (12) comprises a groove (30) that extends in the plane (21), the groove (30) having a constant section having principally two sides (31, 32) and a bottom (33), the sides (31, 32) being substantially parallel to the plane (21) and the bottom (33) being substantially perpendicular to the plane (21), **in that** a functional clearance (35) is provided between the ring (20) and the bottom (33), the functional clearance (35) allowing the translational freedom of the ring (20).

6. The trackball according to any of the preceding claims, **characterised in that** the ring (20) comprises a friction surface (40) that is intended to rub against the sphere (13) in order to brake its rotational movements and **in that** the friction surface (40) has a cylindrical shape that extends perpendicularly to the plane (21), the cylindrical shape being configured to allow the sphere (13) to move translationally perpendicularly to the plane (21).

7. The trackball according to any of the preceding claims, **characterised in that** the ring (20) comprises a stop (45) that is able to limit a translational movement of the sphere (13) perpendicularly to the plane (21).

8. The trackball according to claims 6 and 7, **characterised in that** the stop (45) has a spherical surface portion that is complementary to that of the sphere (13) and extends in continuation of the friction surface (40) without a break in gradient.
